# EUROPEAN PATENT SPECIFICATION

(11) **EP 2 713 022 B1**
(45) Date of publication and mention of the grant of the patent: **18.11.2015**
(21) Application number: 13794160.5
(22) Date of filing: 22.05.2013
(51) Int. Cl.: F01N 3/025, F01N 3/20, F01N 3/24, F01N 3/36, F23D 14/22

(54) **BURNER FOR EXHAUST GAS PURIFICATION DEVICE**
BRENNER FÜR EINE ABGASREINIGUNGSVORRICHTUNG
BRÛLEUR POUR DISPOSITIF DE PURIFICATION DE GAZ D'ÉCHAPPEMENT

(30) Priority: 25.05.2012 JP 2012119897
(43) Date of publication of application: 02.04.2014
(73) Proprietor: Hino Motors, Ltd., Hino-shi, Tokyo 191-8660 (JP)
(72) Inventor: SHIBUYA, Ryo, Hino-shi, Tokyo 191-8660 (JP); TSUMAGARI, Ichiro, Hino-shi, Tokyo 191-8660 (JP)
(74) Representative: Tranter, Andrew David
(86) International application number: PCT/JP2013/064240
(87) International publication number: WO 2013/176184

(56) References cited:
- JP-A- 2007 146 700
- JP-A- 2009 030 608
- JP-B2- 4 393 858
- US-A- 4 538 413
- US-A1- 2011 061 369
- US-A1- 2011 064 369

## Description

### TECHNICAL FIELD

The technique of the present disclosure relates to a burner used in an exhaust purifying device that purifies exhaust from an engine with a filter or a catalyst.

### BACKGROUND ART

Patent document 1 describes an example of a widely used engine exhaust purifying device that captures particulates in the exhaust with a diesel particulate filter (hereinafter referred to as filter). In the exhaust purifying device, the particulates in the exhaust are captured with the filter to purify the exhaust. However, the particulates need to be removed from the filter to maintain the function of the filter.

A known exhaust purifying device capable of removing the particulates from the filter is a device including a burner that heats the exhaust delivered to the filter by burning the fuel for driving the engine. In the exhaust purifying device that includes the burner, when the amount of particulates deposited on the filter exceeds a predetermined amount, the burner burns the fuel to heat the exhaust and raise the temperature of the filter until soot, which is the main component of the particulates, is oxidized. This removes the particulates deposited on the filter and allows for the regenerated filter to capture the particulates in the exhaust again.

For example, US patent no. 4538413 A discloses an exhaust passage which extends from an internal combustion engine to conduct exhaust from the engine. A filter is disposed in the exhaust passage to catch particles in the exhaust. A burner is disposed in the exhaust passage at a position upstream of the filter. The burner receives a mixture of air and fuel and burns the mixture to burn off the particles deposited on the filter. The burner includes a vaporizing member and a guide member.

US patent application no. 2011/061369 A1 discloses a burner provided for use in a diesel exhaust gas treatment system to treat an exhaust flow from a diesel combustion process. The burner includes an inner housing defining a combustion flow path to direct a first portion of the exhaust flow through an ignition zone wherein fuel is ignited, an outer housing surrounding the inner housing to defme an annular bypass flow path between the inner and outer housings to bypass a second portion of the exhaust flow around the ignition zone, and a mixer including a plurality of flow restrictor fingers that extend across the bypass flow path to restrict an available flow area of the bypass flow path, and a plurality of mixer fingers having portions that extend inwardly from a location downstream from the inner housing.

Finally, Japanese patent application no. 2007146700 A discloses that within an exhaust emission control device for an internal combustion engine, which includes an exhaust cleaning member for cleaning exhaust gas emitted from the internal combustion engine, there is a combustion burner disposed upstream of the exhaust cleaning member so as to regenerate the exhaust cleaning member or increase the temperature of the exhaust cleaning member, and take part of the exhaust gas therein by dividing a part of a main flow of the exhaust gas as at least part of the air for combustion. The combustion burner is disposed in such a manner that the radiated flame is not directly overlapped with the main flow of the exhaust gas.

### PRIOR ART DOCUMENT

### PATENT DOCUMENT

Patent Document 1: Japanese Laid-Open Patent Publication No. 2011-157824

### SUAMMARY OF THE INVENTION

### PROBLEMS THAT ARE TO BE SOLVED BY THE INVENTION

The temperature of the engine and the temperature of the exhaust are low immediately after the engine is started compared to when the engine has been continuously operating. This lowers the temperature in the burner that burns fuel. As a result, the mixture of fuel and air becomes difficult to ignite compared to when the temperature in the burner is high. This increases fuel consumption when the temperature of the filter is raised to the same extent.

Such a problem occurs not only in a burner that regenerates the filter as described above but also in other burners that use some of the engine driving fuel for heating, for example, a burner that raises the temperature of the catalyst arranged in the exhaust purifying device. Further, it is desirable that fuel consumption be reduced not only when the engine is started as described above but also when the engine is continuously operating.

It is an object of the technique of the present disclosure to provide a burner for an exhaust purifying device capable of improving the efficiency for burning fuel.

### MEANS FOR SOLVING THE PROBLEMS

One aspect of the present disclosure is a burner used in an exhaust purifying device that purifies exhaust in an exhaust pipe of an engine. The burner is provided with a tubular flame stabilizer, a connecting passage, and a recirculation unit. The flame stabilizer includes an ejection port in a distal end to eject fluid generated through combustion. The connecting passage connects an interior of the flame stabilizer and an exterior of the flame stabilizer. A recirculation unit is arranged at an outer side of the flame stabilizer. The recirculation unit includes a flow receiving portion that receives the fluid ejected from the ejection port, and a guiding portion that guides the fluid received by the flow receiving portion from the flow receiving portion to the connecting passage.

In the aspect described above, some of the fluid generated by the combustion of fuel in the flame stabilizer is received by the flow receiving portion of the recirculation unit and then guided by the guiding portion to the connecting passage formed in the flame stabilizer. Therefore, the high temperature fluid generated by the combustion flows into the region surrounded by the flame stabilizer and raises the temperature in the flame stabilizer. This increases the efficiency for burning fuel in the flame stabilizer.

In another aspect of the burner according to the present disclosure, the flow receiving portion is formed to be annular to face an edge of the ejection port in an axial direction of the flame stabilizer.

The fluid ejected from the ejection port includes the fluid diffused to the periphery of the ejection port and the fluid substantially flowing straight from the ejection port. The fluid diffused to the periphery of the ejection port normally strikes pipes and the like surrounding the ejection port thereby raising the temperature of the pipes, and then reaches a heating subject in the ejection direction. The fluid substantially flowing straight from the ejection port along the axis of the flame stabilizer reaches the heating subject without striking pipes and the like. Thus, the fluid substantially flowing straight from the ejection port is preferably used for the heating in terms of increasing the temperature rising rate of the heating subject.

According to the flow receiving portion in the other aspect described above, the flow receiving portion facing the edge of the ejection port in the axial direction of the flame stabilizer guides the fluid substantially flowing straight from the ejection port to the target of heating. Thus, the temperature rising rate in the target of heating can be increased compared to when the flow receiving portion is arranged at a position facing the ejection port, that is, a position facing the portion on the radially inner side of the edge of the ejection port. The annular flow receiving portion receives the fluid diffused from the ejection port and guides the fluid to the guiding portion. Thus, the amount of fluid guided to the interior of the flame stabilizer is increased compared to when the corresponding flow receiving portion is formed, for example, at only one part in the circumferential direction of the ejection port. As a result, the temperature of the interior of the flame stabilizer can be raised while suppressing decreases in the temperature rising rate of the heating subject.

In another aspect of the burner according to the present disclosure, the guiding portion is formed to surround the flame stabilizer.

According to the guiding portion of the other aspect described above, the temperature of the flame stabilizer can be raised at the periphery of the flame stabilizer and most of the fluid flowing at the periphery of the flame stabilizer can be guided to the interior of the flame stabilizer since the guiding portion surrounds the flame stabilizer.

In another aspect of the burner according to the present disclosure, the guiding portion includes a tubular outer guiding portion that surrounds the flame stabilizer, and a tubular inner guiding portion that extends from an inner edge of the flow receiving portion toward the ejection port.

Most of the fluid received by the flow receiving portion flows to either the direction toward the inner edge of the flow receiving portion or the direction toward the outer edge of the flow receiving portion. In this case, according to the guiding portion of another aspect described above, most of the fluid flowing toward the inner edge of the flow receiving portion flows from the inner guiding portion toward the outer edge of the flow receiving portion due to the striking with the inner guiding portion. As a result, most of the fluid received by the flow receiving portion is deviated toward the outer edge of the flow receiving portion so that the fluid is easily guided into the flame stabilizer as compared with the recirculation unit that includes only the flow receiving portion.

In another aspect of the burner according to the present disclosure, the connecting passage is arranged closer to a basal end of the flame stabilizer with respect to a middle of the flame stabilizer in the axial direction.

According to other aspect described above, the path of the fluid that flows into the flame stabilizer is lengthened in the interior of the flame stabilizer as compared to when the connecting passage is formed closer to the distal end of the flame stabilizer. Thus, the temperature of the interior of the flame stabilizer is easily raised, and the fuel is easily burned in the flame stabilizer.

In another aspect of the burner according to the present disclosure, the flame stabilizer includes an inner tube and an outer tube that surrounds the inner tube. The flame stabilizer is connected to an air supply pipe that supplies air to a gap between the inner tube and the outer tube. The inner tube includes an air supplying hole that connects the gap between the inner tube and the outer tube with the interior of the inner tube.

According to the other aspect described above, the air used to burn fuel receives the heat of the fluid generated by the combustion while being supplied to the interior of the inner tube through the gap between the inner tube and the outer tube. Thus, the air having a higher temperature is supplied to the interior of the inner tube compared to when the air of the air supply pipe is directly supplied to the interior of the inner tube. In particular, when the guiding portion is formed to surround the flame stabilizer, the flame stabilizer receives heat from the fluid flowing through the gap between the outer tube of the flame stabilizer and the guiding portion. Thus, the air passing through the gap between the inner tube and the outer tube also receives heat. This supplies the air having a higher temperature is supplied to the interior of the inner tube. As a result, the temperature of the interior of the inner tube is further raised, and the fuel is more easily burned.

In another aspect of the burner according to the present disclosure, the distal end of the flame stabilizer has an enlarged diameter.

According to the other aspect described above, the fluid from the ejection port is more easily received by the flow receiving portion. Thus, the fluid guided to the interior of the flame stabilizer by the recirculation unit further increases.

Another aspect of the burner according to the present disclosure further includes an ignition unit in the flame stabilizer.

The fuel or the components contained in the fuel may deposit on the ignition unit of the burner when burning fuel. Such deposits contain carbon that adversely affects the insulation of portions where insulation is not necessary in the ignition unit. As a result, the ignition of the air-fuel mixture in the ignition unit becomes unstable. In this regard, according to the aspect described above, the temperature of the ignition unit is raised when the fluid of high temperature flows into the flame stabilizer. Thus, the fuel and the components of the fuel are less likely to deposit on the ignition unit. As a result, the ignition of the air-fuel mixture in the ignition unit is less likely to be unstable, and the fuel is easily burned.

In another aspect of the burner according to the present disclosure, the interior of the flame stabilizer is partitioned into a premixing chamber, which generates a mixture of fuel and air, and a combustion region, which burns the mixture supplied from the premixing chamber.

According to the other aspect described above, the fuel is mixed with air in advance in the premixing chamber and supplied to the combustion region, and the supplied mixture is burned in the combustion region. Thus, the fuel is easily burned compared to when the fuel and the air are supplied to the combustion region in a non-mixed state.

### BRIEF DESCRIPTION OF THE DRAWINGS

Fig. 1 is a block diagram showing the entire structure of a diesel engine including a burner according to a first embodiment.
Fig. 2 is a cross-sectional view of the burner in the first embodiment.
Fig. 3 is a view showing the flow of fluid in the burner of the first embodiment.
Fig. 4 is a cross-sectional view of a burner according to a second embodiment.
Fig. 5 is a cross-sectional view taken along line 5-5 in Fig. 4.
Fig. 6 is a cross-sectional view taken along line 6-6 in Fig. 4.

### EMBODIMENTS OF THE INVENTION

### [First Embodiment]

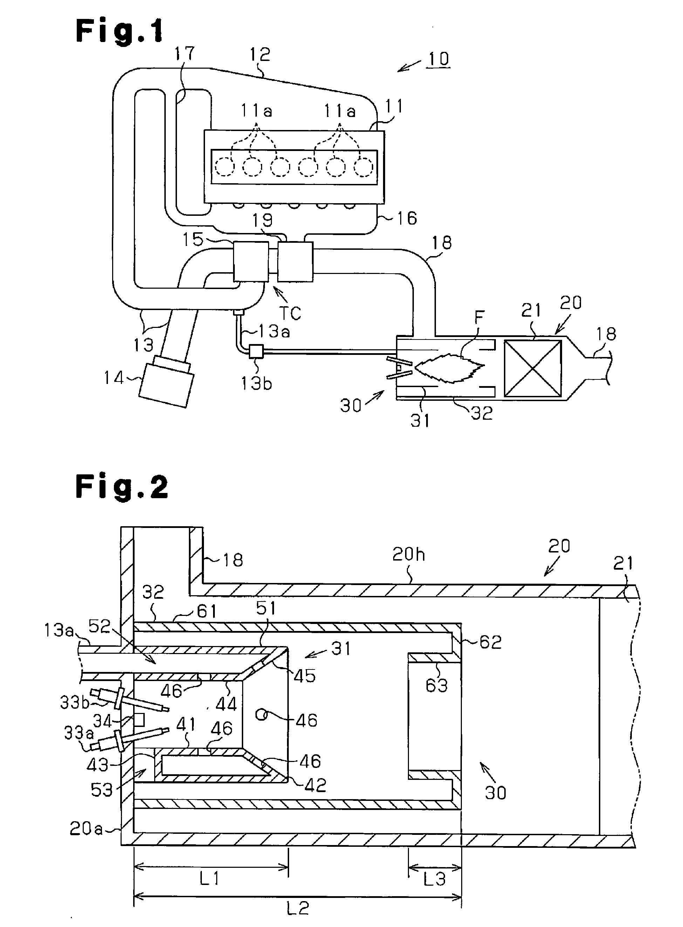

A first embodiment of a burner according to the present disclosure will now be described with reference to Fig. 1 to Fig. 3. First, the entire structure of a diesel engine including the burner will be described with reference to Fig. 1. The description will focus on a passage for the air drawn into the diesel engine and a passage of the exhaust discharged from the diesel engine, and other parts will not be described. Hereinafter, "upstream" and "downstream" are defined with respect to the direction in which air and exhaust flows in the diesel engine.

### [Schematic Structure of Diesel Engine]

As shown in Fig. 1, a cylinder block 11 of a diesel engine 10 includes six cylinders 11a arranging in a single row. An intake manifold 12, which supplies intake air to each cylinder 11a, and an exhaust manifold 16, into which the exhaust from each cylinder 11a flows, are connected to the six cylinders 11a.

An intake pipe 13, which is a passage for the intake air, is connected to the intake manifold 12. An air cleaner 14 is connected to an upstream end of the intake pipe 13, and a compressor 15 of a turbo charger TC is connected to the middle of the intake pipe 13. An exhaust pipe 18 and an EGR pipe 17, which are passages for the exhaust, are connected to the exhaust manifold 16. The EGR pipe 17 connects the intake pipe 13 and the exhaust manifold 16 to draw exhaust into the intake pipe 13 by. A turbine 19, which is connected to the compressor 15 described above, is connected to an upstream portion of the exhaust pipe 18. An exhaust purifying device 20 that purifies exhaust by removing particulates, for example, soot, from the exhaust is arranged in a downstream portion of the exhaust pipe 18.

The exhaust purifying device 20 includes a filter 21, which captures the particulates suspended in the exhaust, and an exhaust purification processing device burner (hereinafter referred to as the burner 30), which heats the exhaust delivered to the filter 21 and which is located at the upstream side of the filter 21. The filter 21 has a honeycomb structure made of, for example, porous ceramic so that the particulates in the exhaust are captured in the inner wall surfaces of a large number of pillars forming the honeycomb structure.

An air supply pipe 13a connects the downstream portion of the compressor 15 in the intake pipe 13 to the burner 30. An air valve 13b is connected to the middle of the air supply pipe 13a. Intake air is drawn from the intake pipe 13 into the exhaust purifying device 20 through the air supply pipe 13a when the air valve 13b is open, and the flow of intake air from the intake pipe 13 to the exhaust purifying device 20 is stopped when the air valve 13b is closed.

### [Structure of Burner]

With reference to Fig. 2, the structure of the burner 30 will be described in further detail together with a part of the structure of the exhaust purifying device 20.

The exhaust pipe 18, which extends in a radial direction of a housing 20h, is connected to an end (basal end) closer to the upstream side of the housing 20h, which is formed to be cylindrical. The burner 30 and the filter 21 are arranged in the housing 20h in order from upstream to downstream.

The burner 30 includes a flame stabilizer 31 formed to be cylindrical and concentric with the housing 20h. The flame stabilizer 31 is fixed to an upstream wall 20a, which is a wall of the basal end in the housing 20h. A recirculation unit 32, which is formed to be cylindrical and concentric with the flame stabilizer 31 is arranged on the outer side of the flame stabilizer 31, with a gap formed with the flame stabilizer 31. The recirculation unit 32 is fixed to the upstream wall 20a. Two spark plugs 33a, 33b serving as ignition units are fixed to the upstream wall 20a at the inner side of the flame stabilizer 31. A fuel injection nozzle 34 is fixed to the upstream wall 20a between the two spark plugs 33a, 33b at the inner side of the flame stabilizer 31.

The flame stabilizer 31 has a dual tube structure including an inner tube 41 and an outer tube 51 extending from the upstream wall 20a toward the filter 21. Part of the basal end of the flame stabilizer 31 is connected to the upstream wall 20a.

The inner tube 41 is formed to be cylindrical and concentric with the housing 20h, and an ejection port 42 is formed at the distal end of the inner tube 41. In other words, the distal end of the inner tube 41 in the flame stabilizer 31 forms the ejection port 42. The basal end of the inner tube 41 is spaced apart from the upstream wall 20a by a passage formation portion 43, which is a circumferential portion of the inner tube 41, and the basal end of the inner tube 41 is connected to the upstream wall 20a by the remaining circumferential portion of the inner tube 41.

The inner tube 41 includes a constant diameter portion 44, which is a portion closer to the basal end, and an enlarged diameter portion 45, which is a portion closer to the distal end. A plurality of air supplying holes 46 extend through each of the constant diameter portion 44 and the enlarged diameter portion 45. The air supplying holes 46 are formed, for example, at a predetermined interval in the circumferential direction of the constant diameter portion 44 and at a predetermined interval in the circumferential direction of the enlarged diameter portion 45.

The outer tube 51 is formed to be cylindrical and concentric with the housing 20h, and surrounds the inner tube 41 with a gap (air passage 52) formed between the outer tube 51 and the inner tube 41. The distal end of the outer tube 51 is connected to the distal end of the inner tube 41 over the entire circumferential direction of the outer tube 51. This blocks the air passage 52, which is the gap between the outer tube 51 and the inner tube 41. The basal end of the outer tube 51 is connected to the passage formation portion 43 of the inner tube 41 at a circumferential portion of the outer tube 51 and fixed to the upstream wall 20a by the remaining circumferential portion of the outer tube 51.

The air passage 52, which is the gap between the inner tube 41 and the outer tube 51, is connected with the air supply pipe 13a through the upstream wall 20a by connecting the inner tube 41 and the outer tube 51. Furthermore, a connecting passage 53 radially extends through the inner tube 41 and the outer tube 51 to connect the interior of the inner tube 41 and the exterior of the outer tube 51 between the passage formation portion 43 and the upstream wall 20a.

The recirculation unit 32 is formed to be cylindrical so as to extend from the upstream wall 20a toward the filter 21 and surround the entire flame stabilizer 31, and is bent back toward the upstream wall 20a at a distal end positioned closer to the filter 21 with respect to the flame stabilizer 31.

The recirculation unit 32 includes an outer guiding portion 61 serving as a guiding portion. The outer guiding portion 61 is formed to be cylindrical and extends from the upstream wall 20a toward the filter 21, and a gap connecting to the connecting passage 53 is formed between the outer guiding portion 61 and the flame stabilizer 31. The length in the axial direction of the outer guiding portion 61 is set as an outer tube length L2, and the outer tube length L2 is set to be longer than a flame stabilizer length L1.

The recirculation unit 32 also includes an annular flow receiving portion 62 facing the edge of the ejection port 42 in the axial direction of the flame stabilizer 31. The flow receiving portion 62 extends inward in the radial direction of the outer guiding portion 61 over the entire circumferential direction of the outer guiding portion 61 at the distal end of the outer guiding portion 61.

The recirculation unit 32 further includes an inner guiding portion 63 having a cylindrical shape extending from the inner edge of the flow receiving portion 62 toward the ejection port 42. The length in the axial direction of the inner guiding portion 63 is set as an inner tube length L3, and the inner tube length L3 is set to be shorter than the length obtained by subtracting the flame stabilizer length L1 from the outer tube length L2.

The fuel injection nozzle 34 is, for example, connected to a fuel pump for supplying fuel to the cylinder 11a. The fuel injection nozzle 34 injects fuel into a region surrounded by the flame stabilizer 31 at a predetermined frequency and a predetermined pressure.

The spark plugs 33a, 33b include an anode rod 33a and a cathode rod 33b. When voltage is applied between the anode rod 33a and the cathode rod 33b, a spark discharge occurs between the anode rod 33a and the cathode rod 33b. Flame F is generated in the flame stabilizer 31 when the mixture of fuel and air is ignited and the fuel in the flame stabilizer 31 is burned.

### [Operation of Burner]

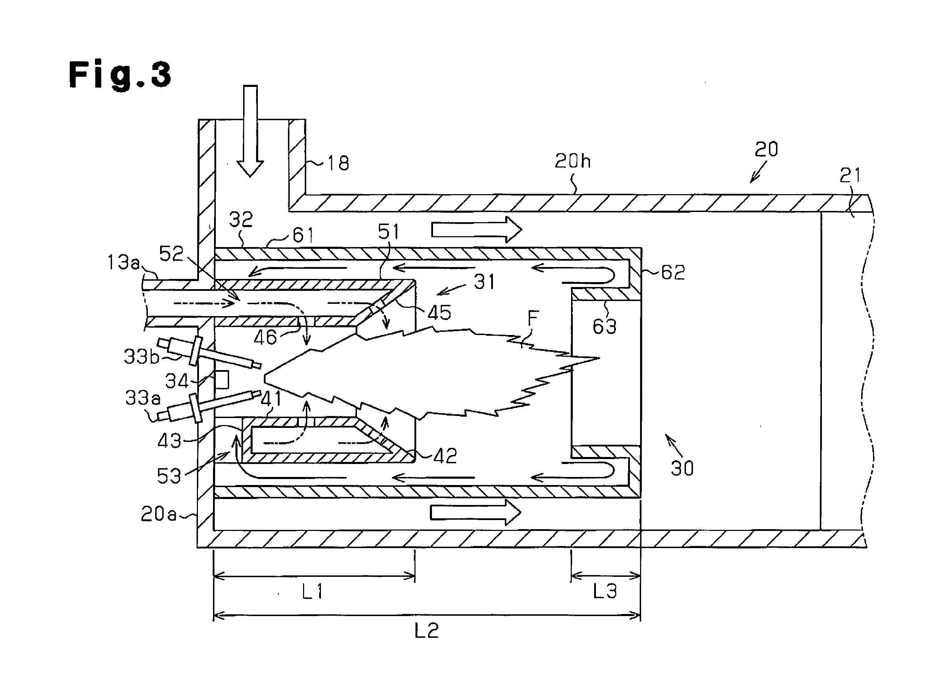

The regeneration of the filter 21 by the burner 30 will now be described with reference to Fig. 3. In Fig. 3, the flow of exhaust supplied from the exhaust pipe 18 to the exhaust purifying device 20 is shown by thick arrows, the flow of air supplied from the air supply pipe 13a is shown by broken line arrows, and the flow of combustion gas generated by the combustion of fuel is shown by solid line arrows. The combustion gas in this case includes gas generated when burning the fuel. The combustion gas in this case also includes gas in the flame stabilizer 31, which does not contribute to the combustion of fuel but is heated by the flame F generated in the flame stabilizer 31.

As shown in Fig. 3, in the burner 30, the air from the air supply pipe 13a is first supplied to a combustion region, which is a region surrounded by the inner tube 41, through the air passage 52 and the air supplying hole 46 of the flame stabilizer 31 when performing regenerating the filter 21. The air supplied to the combustion region is thus supplied in the direction from the upstream wall 20a toward the filter 21. The exhaust supplied from the exhaust pipe 18 into the exhaust purifying device 20 in this case flows through the gap between the recirculation unit 32 and the housing 20h in the direction from the upstream wall 20a toward the filter 21. The exhaust raises the temperature of the entire recirculation unit 32.

After the injection of fuel from the fuel injection nozzle 34 is started, voltage is applied to the spark plugs 33a, 33b. This ignites the mixture of fuel and air. The flame F is generated in the inner tube 41, and the fluid generated by combustion is ejected from the ejection port 42 as combustion gas.

In this case, the temperature of the exhaust that comes into contact with the recirculation unit 32 is raised since the recirculation unit 32 is heated by the flame F generated in the region surrounded by the flame stabilizer 31 and the recirculation unit 32. When the flame F is generated beyond the distal end of the recirculation unit 32, the exhaust passing between the distal end of the recirculation unit 32 and the filter 21 is heated by the flame F. The exhaust heated in such a manner is delivered to the filter 21. This raises the temperature of the filter 21 to an extent the soot deposited on the filter 21 is oxidized. The temperature of the filter 21 can also be raised by supplying the combustion gas generated in the flame stabilizer 31 to the filter 21 along with the heated exhaust.

Although most of the combustion gas flows from the region surrounded by the flame stabilizer 31 toward the filter 21, some of the gas diffused from the ejection port 42 strikes the flow receiving portion 62. This changes the flow toward the flame stabilizer 31. Some of the combustion gas flowing toward the flame stabilizer 31 flows between the outer guiding portion 61 and the outer tube 51 along the inner circumferential surface of the outer guiding portion 61, and flows into the combustion region through the connecting passage 53. This raises the temperature of the combustion region as compared to a structure in which the combustion gas is not returned to the combustion region. In this case, the temperature of the flame stabilizer 31 can be raised from the periphery of the flame stabilizer 31. Furthermore, most of the combustion gas flowing to the periphery of the flame stabilizer 31 can be guided into the inner tube 41 since the outer guiding portion 61 surrounds the entire circumferential direction of the outer tube 51. The enlarged diameter portion 45 is formed in the inner tube 41 of the flame stabilizer 31. Thus, the combustion gas serving as the fluid generated by the combustion of fuel is easily guided to the recirculation unit 32 as compared to a structure in which the enlarged diameter portion 45 is not formed.

The air used for such combustion is supplied to the interior of the inner tube 41 through the air passage 52, which is the gap between the inner tube 41 and the outer tube 51. In this case, the air flowing through the air passage 52 receives heat from the combustion gas flowing through the gap between the outer guiding portion 61 and the outer tube 51. Therefore, the air having a higher temperature is supplied to the interior of the inner tube 41 compared to when the air of the air supply pipe 13a is directly supplied to the interior of the inner tube 41. As a result, the temperature of the interior of the inner tube 41 is raised, and the fuel is easily burned.

In addition, the inner guiding portion 63 of the recirculation unit 32 is formed to be cylindrical and extends from the inner edge of the flow receiving portion 62 toward the ejection port 42. Most of the combustion gas received by the flow receiving portion 62 flows in either the direction toward the inner edge of the flow receiving portion 62 or the direction toward the outer edge of the flow receiving portion 62. In this case, most of the fluid flowing toward the inner edge of the flow receiving portion 62 flows from the inner guiding portion 63 toward the outer edge of the flow receiving portion 62 after striking the inner guiding portion 63. Consequently, most of the combustion gas received by the flow receiving portion 62 is guided to the connecting passage 53 by the outer guiding portion 61. In other words, most of the combustion gas received by the flow receiving portion 62 is deviated toward the outer edge of the flow receiving portion 62. Thus, fluid is easily guided to the interior of the inner tube 41.

Furthermore, the connecting passage 53 is arranged at the portion closer to the basal end with respect to the middle of the flame stabilizer 31 in the axial direction, in particular, the basal end of the flame stabilizer 31. This lengthens the flowing passage of the combustion gas in the inner tube 41 compared to a structure in which the connecting passage 53 is formed at the position closer to the distal end. Therefore, the temperature of the combustion region may be easily raised.

In particular, if the filter 21 is regenerated immediately after the diesel engine 10 is started, the temperature of the exhaust supplied to the exhaust purifying device 20 is not high. Thus, the temperature of the flame stabilizer 31, and ultimately, the temperature of the combustion region are low such that fuel is difficult to ignite. If the combustion gas is returned to the combustion region in such a state, the temperature of the combustion region is raised. Thus, the fuel is easily burned.

Even if the filter 21 is regenerated after the diesel engine 10 becomes warm, combustion gas having a higher temperature than the exhaust is returned to the combustion region. This further raises the temperature of the flame stabilizer 31 and the temperature of the combustion region. Therefore, the fuel is more easily burned.

The combustion gas ejected from the ejection port 42 includes the combustion gas diffused to the periphery of the ejection port 42 and the combustion gas substantially flowing straight from the ejection port 42. If the recirculation unit 32 is not included, the combustion gas diffused to the periphery of the ejection port 42 would normally strike the housing 20h and the like surrounding the ejection port 42 thus raising the temperature of the housing 20h. Then, the combustion gas would strike the exhaust in the ejection direction and the filter 21. The combustion gas substantially flowing straight from the ejection port 42 strikes the exhaust and the filter 21 without striking the housing 20h and the like. The combustion gas substantially flowing straight from the ejection port 42 is preferably used for heating to increase the temperature rising rate of the filter 21.

With the recirculation unit 32 described above, the flow receiving portion 62 facing the edge of the ejection port 42 in the axial direction of the flame stabilizer 31 guides the combustion gas substantially flowing straight from the ejection port 42 toward the filter 21. This increases the temperature rising rate of the filter 21 as compared to when a shielding portion such as the flow receiving portion 62 is arranged at a position facing the ejection port 42, that is, when the flow receiving portion 62 is arranged on the radially inner side of the edge of the ejection port 42. The annular flow receiving portion 62 guides the combustion gas, which would be diffused from the ejection port 42 to strike the housing 20h, to the outer guiding portion 61 before striking the housing 20h. This increases, for example, the combustion gas guided to the combustion region as compared to when the flow receiving portion 62 is formed only in a circumferential portion of the ejection port 42. As a result, the temperature of the combustion region can be raised while suppressing decreases in the temperature rising rate of the filter 21.

The fuel or the components contained in the fuel deposit on the spark plugs 33a, 33b when fuel is burned. Such deposits contain carbon that adversely affects the insulation of portions where insulation is not necessary in the spark plugs 33a, 33b. As a result, the ignition of the mixture of fuel and air with the spark plugs 33a, 33b becomes unstable. In this regard, the temperature of the spark plugs 33a, 33b is raised when the combustion gas flows into the flame stabilizer 31, and the fuel and the components of the fuel described above are less likely to deposit on the spark plugs 33a, 33b. As a result, the ignition of the mixture with the spark plugs 33a, 33b is stabilized, and fuel is easily burned.

As described above, the burner of the first embodiment has the following advantages.
(1) Some of the combustion gas generated by the combustion of fuel in the flame stabilizer 31 strikes the flow receiving portion 62 and is guided to the outer guiding portion 61 so that a flow from the flame stabilizer 31 toward the filter 21 is changed to a flow from the filter 21 toward the flame stabilizer 31. The temperature of the combustion region is raised by the flow of the combustion gas into the combustion region. As a result, the fuel is easily burned in the flame stabilizer 31.
(2) The flow receiving portion 62 facing the edge of the ejection port 42 in the axial direction of the flame stabilizer 31 guides the combustion gas substantially flowing straight from the ejection port 42 to the filter 21, and the flow receiving portion 62 receives the combustion gas diffused from the ejection port 42 and guides the gas to the outer guiding portion 61. Therefore, the temperature of the interior of the flame stabilizer 31 is raised while suppressing decreases in the temperature rising rate of the filter 21.
(3) Since the outer guiding portion 61 surrounds the flame stabilizer 31, the temperature of the flame stabilizer 31 is raised at the periphery of the flame stabilizer 31, and most of the fluid flowing through the periphery of the flame stabilizer 31 is guided to the interior of the flame stabilizer 31.
(4) Some of the combustion gas received by the flow receiving portion 62 strikes the inner guiding portion 63 and is guided to the outer guiding portion 61. The combustion gas, of which flow is changed to a flow from the filter 21 toward the flame stabilizer 31, is further increased compared to when the recirculation unit 32 includes only the outer guiding portion 61 and the flow receiving portion 62. Therefore, a larger amount of combustion gas flows into the combustion region, and the temperature of the interior surrounded by the flame stabilizer 31 is further raised.
(5) The air used to burn fuel receives heat from the combustion gas while being supplied to the combustion region through the air passage 52 in the flame stabilizer 31. Thus air having a higher temperature is supplied to the combustion region of the space surrounded by the flame stabilizer 31 compared to when air is directly supplied from the air supply pipe 13a to the combustion region. As a result, the temperature of the combustion region is raised, and, consequently, fuel is easily burned.
(6) The connecting passage 53 is arranged at the basal end of the flame stabilizer 31. Thus, the flow passage of the combustion gas in the inner tube 41 is lengthened as compared to when the connecting passage 53 is formed at a position closer to the distal end. The temperature of the combustion region is thus easily raised.
(7) The combustion gas ejected from the ejection port 42 is guided by the enlarged diameter portion 45 and easily strikes the flow receiving portion 62. This further ensures that the flow of some of the combustion gas is changed to flow from the filter 21 toward the flame stabilizer 31.
(8) The temperature of the spark plugs 33a, 33b is raised when the combustion gas flows into the flame stabilizer 31 so that the fuel itself and the component of the fuel are less likely to deposit on the spark plugs 33a, 33b. As a result, the ignition of the mixture with the spark plugs 33a, 33b is stabilized, and the fuel is easily burned.

### [Second Embodiment]

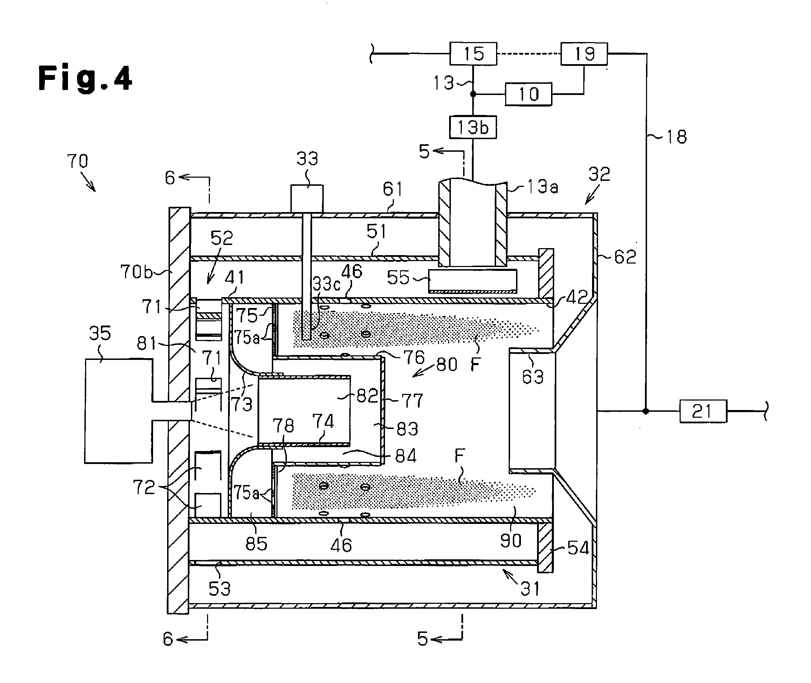

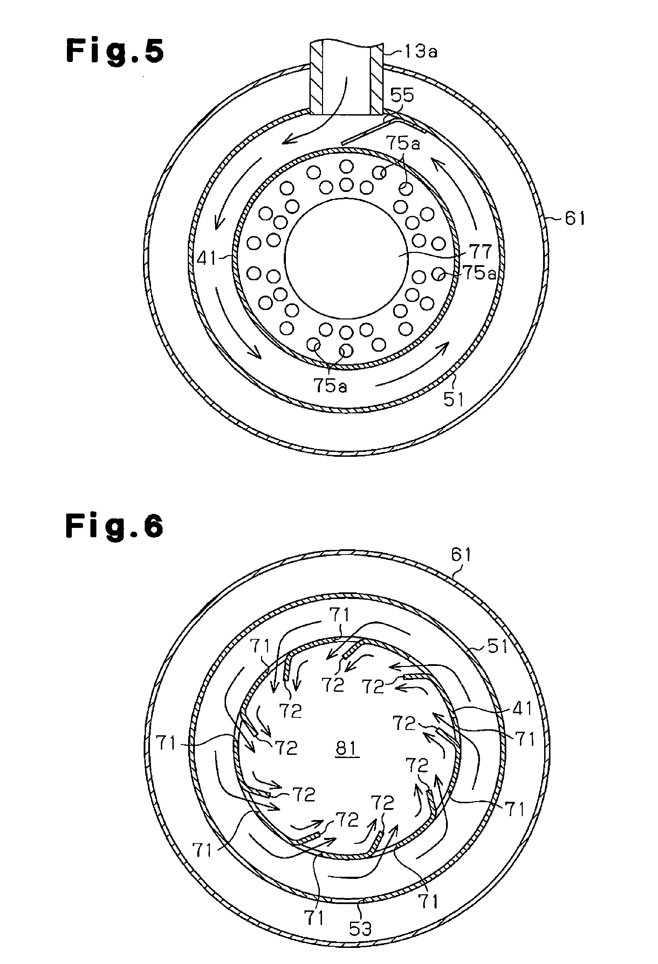

A second embodiment of a burner according to the present disclosure will now be described with reference to Fig. 4 to Fig. 6. Fig. 5 shows a cross-sectional structure taken along line 5-5 in Fig. 4, and Fig. 6 shows a cross-sectional structure taken along line 6-6 in Fig. 4. The burner of the second embodiment differs from the burner of the first embodiment in the structure associated with the supply of fuel in the burner and the structure associated with the supply of air. Such differences will be described in detail below, and other parts will not be described.

### [Structure of Burner]

As shown in Fig. 4, a burner 70 includes a base body 70b formed to have the shape of a circular plate. The base body 70b is fixed to the basal end of the flame stabilizer 31, which is formed to be cylindrical. The recirculation unit 32 is arranged on the outer side of the flame stabilizer 31 with a gap formed with the flame stabilizer 31, and the basal end of the recirculation unit 32 is fixed to the base body 70b.

The flame stabilizer 31 has a dual tube structure including the inner tube 41 and the outer tube 51 extending from the base body 70b toward the filter 21. The inner tube 41 of the flame stabilizer 31 is formed to be cylindrical and concentric with the recirculation unit 32, and the ejection port 42 is formed in the distal end of the inner tube 41.

The outer tube 51 of the flame stabilizer 31 is formed to be cylindrical and concentric with the recirculation unit 32, and surrounds the inner tube 41 with a gap formed between the outer tube 51 and the inner tube 41. The space between the distal end of the inner tube 41 and the distal end of the outer tube 51 is closed by a closing plate 54, which is formed to be annular. The air supply pipe 13a is connected to the air passage 52, which is the gap between the inner tube 41 and the outer tube 51. A guiding plate 55, which is formed to be plate-shaped and which opposes the opening of the air supply pipe 13a, is fixed to the inner circumferential surface of the outer tube 51. The connecting passage 53 extending through the outer tube 51 between the outer circumferential surface and the inner circumferential surface is formed at the basal end of the outer tube 51.

The recirculation unit 32 includes the outer guiding portion 61, the flow receiving portion 62, and the inner guiding portion 63. Further, the recirculation unit 32 is formed to be cylindrical and surrounds the entire flame stabilizer 31. The outer guiding portion 61 is formed to be cylindrical and extends from the base body 70b toward the filter 21. The flow receiving portion 62, which is formed to be annular and faces the edge of the ejection port 42, is arranged at the distal end of the outer guiding portion 61 at a portion closer to the filter 21 with respect to the flame stabilizer 31. Specifically, the flow receiving portion 62 extends inward in the radial direction over the entire circumferential direction of the outer guiding portion 61, and is bent toward the basal end of the outer guiding portion 61 after extending inward in the radial direction. The inner guiding portion 63 is arranged at the inner edge of the flow receiving portion 62. The inner guiding portion 63 is formed to be cylindrical and extends from the inner edge of the flow receiving portion 62 toward the base body 70b.

The end (basal portion) closer to the base body 70b of the two ends in the inner tube 41 includes a plurality of inner connecting passages 71, through which air flows from the air supply pipe 13a into the inner tube 41. The inner connecting passages 71 are arranged in intervals in the circumferential direction. In the present embodiment, the inner connecting passage 71 and the connecting passage 53 form a connecting passage. The inner tube 41 includes a raised piece 72 in which a part of the circumferential wall is cut and raised inward in the radial direction of the inner tube 41 from the edge of each inner connecting passage 71.

A plurality of air supplying holes 46 extending through the inner tube 41 are formed at a portion closer to the ejection port 42 with respect to the inner connecting passage 71 in the inner tube 41. Each of the plurality of air supplying holes 46 guides air from the air passage 52 to the inner tube 41.

A fuel supply unit 35 for supplying fuel into the inner tube 41 is fixed to the base body 70b. A supply port for fuel is formed in the distal end of the fuel supply unit 35. The supply port is arranged in the inner tube 41. A fuel pump for supplying fuel to the engine is connected to the fuel supply unit 35, and the fuel supply unit 35 supplies the inner tube 41 with the fuel from the fuel pump in a vaporized state.

A connecting wall portion 73 is fixed between the inner connecting passage 71 and the air supplying hole 46 in the inner circumferential surface of the inner tube 41. The connecting wall portion 73 is formed to be annular, and is bent toward the distal end of the inner tube 41 after extending inward in the radial direction. The outer edge of the connecting wall portion 73 is connected over the entire circumferential direction to the inner tube 41.

The space surrounded by the inner tube 41 is partitioned into a first mixing chamber 81, a second mixing chamber 82, a third mixing chamber 83, a fourth mixing chamber 84, and a fifth mixing chamber 85.

The space between the base body 70b and the connecting wall portion 73 in the space surrounded by the inner tube 41 is the first mixing chamber 81. The first mixing chamber 81 receives air from each inner connecting passage 71 and fuel from the fuel supply unit 35. In the first mixing chamber 81, the air swirling about the axis of the flame stabilizer 31 is mixed with the fuel injected toward the swirling center of the air. A basal portion of a mixing inner tube 74, which is formed to be cylindrical is connected to the distal end of the connecting wall portion 73, and extended through the connecting wall portion 73. In other words, the basal portion, which is the one of the two ends of the mixing inner tube 74 that is closer to the base body 70b, is joined with the connecting wall portion 73, and the connecting wall portion 73 closes the gap between the inner circumferential surface of the inner tube 41 and the mixing inner tube 74. A distal portion, which is the one of the two ends of the mixing inner tube 74 that is closer to the ejection port 42, is open.

A support plate 75, which is formed to be annular, is fixed to a portion closer to the ejection port 42 with respect to the fixing area of the connecting wall portion 73 on the inner circumferential surface of the inner tube 41. A mixing outer tube 76, which is formed to be cylindrical and which surrounds the mixing inner tube 74, is connected to the inner circumferential edge of the support plate 75. The distal end of the mixing outer tube 76 is positioned closer to the ejection port 42 of the inner tube 41 with respect to the distal end of the mixing inner tube 74, and the closing plate 77 for closing the opening is connected to the distal end of the mixing outer tube 76. At the support plate 75, a plurality of mixture supply ports 75a extending through the support plate 75 between the surface at the side of the base body 70b and the surface at the side of the ejection port 42 are formed. A metal mesh 78 covering the plurality of mixture supply ports 75a is attached to the support plate 75 on the surface at the side of the ejection port 42.

The second mixing chamber 82, which is a space surrounded by the inner circumferential surface of the mixing inner tube 74, is formed in the space surrounded by the inner tube 41. The mixture from the first mixing chamber 81 enters the second mixing chamber 82. In the space surrounded by the inner tube 41, the third mixing chamber 83, which is the space surrounded by the inner circumferential surface of the mixing outer tube 76 and the closing plate 77, is formed at a position closer to the ejection port 42 with respect to the second mixing chamber 82. The mixture from the second mixing chamber 82 enters the third mixing chamber 83.

The fourth mixing chamber 84 is formed by a gap of the mixing inner tube 74 and the mixing outer tube 76 in the space surrounded by the inner tube 41. The mixture from the third mixing chamber 83 enters the fourth mixing chamber 84. In the space surrounded by the inner tube 41, the fifth mixing chamber 85 is formed by a space surrounded by the inner circumferential surface of the inner tube 41, the support plate 75, and the connecting wall portion 73. The mixture from the fourth mixing chamber 84 enters the fifth mixing chamber 85. In the burner 70, the first mixing chamber 81, the second mixing chamber 82, the third mixing chamber 83, the fourth mixing chamber 84, and the fifth mixing chamber 85 form a single premixing chamber 80.

The spark plug 33 is connected to the outer guiding portion 61 of the recirculation unit 32. An ignition portion 33c formed at the distal end of the spark plug 33 is arranged closer to the distal end in the axial direction of the flame stabilizer 31 with respect to the support plate 75 between the mixing outer tube 76 and the inner tube 41 in the radial direction. In the burner 70, the gap between the inner circumferential surface of the flame stabilizer 31 and the outer circumferential surface of the mixing outer tube 76 forms a combustion region 90 with the space closer to the ejection port 42 with respect to the closing plate 77 in the inner tube 41.

As shown in Fig. 5, the guiding plate 55 is fixed to the inner circumferential surface of the outer tube 51, and is formed to have the shape of a plate that covers part of the opening of the air supply pipe 13a. The guiding plate 55 is bent inward in the radial direction from the portion fixed to the inner circumferential surface so as to incline toward the outer circumferential surface of the inner tube 41 as the distal end becomes closer. The flow of air from the air supply pipe 13a toward the outer tube 51 strikes the guiding plate 55 so that the flow directed inward in the radial direction is changed to a flow along the outer circumferential surface of the inner tube 41. A swirling flow that swirls around the inner tube 41 is thereby generated between the outer tube 51 and the inner tube 41.

As shown in Fig. 6, a plurality of raised pieces 72 formed on the circumferential wall of the inner tube 41 is bent at an angle covering a part of the inner connecting passage 71. The raised piece 72 guides the air flowing from the inner connecting passage 71 into the inner tube 41, thus generating the swirling flow in the inner tube 41. The swirling flow generated by the guiding plate 55 of the outer tube 51 and the swirling flow generated by the raised piece 72 have the same swirling direction.

### [Operation of Burner]

When the fuel is burned by the burner 70, the air flowing through the intake pipe 13 is first supplied from the air supply pipe 13a to the air passage 52 by opening the air valve 13b. The air flows from the distal end toward the basal end of the inner tube 41 along the outer circumferential surface of the inner tube 41, and enters the first mixing chamber 81 from the inner connecting passage 71. The air flowing through the air passage 52 is thereby heated.

Since the vaporized fuel is supplied from the fuel supply unit 35 to the first mixing chamber 81, the air from the inner connecting passage 71 and the fuel from the fuel supply unit 35 are mixed in the first mixing chamber 81 thus generating the mixture including air and fuel. The mixture generated by the first mixing chamber 81 passes from the second mixing chamber 82 to the fifth mixing chamber 85 in order, and enters the combustion region 90 through the plurality of mixture supply ports 75a formed in the support plate 75.

Thus, the fuel mixed with air in advance is supplied to the combustion region 90 so that the fuel is easily ignited compared to when air and fuel are individually supplied to the combustion region. Furthermore, the air heated in the air passage 52 is supplied to the premixing chamber 80, so that the temperature of the mixture supplied to the combustion region 90 is raised compared to when the air is not heated. This easily ignites the mixture.

In the combustion region 90, the mixture is ignited by the spark plug 33. This generates the flame F that extends toward the ejection port 42 of the flame stabilizer 31. In the combustion region 90, the air supplied from the air supplying hole 46 to the combustion region 90 is mixed with the mixture. This avoids a situation in which the mixture becomes difficult to burn due to insufficient air.

Some of the high temperature fluid generated when burning the mixture is guided toward the flow receiving portion 62 by the inner guiding portion 63, and the fluid guided to the flow receiving portion 62 flows toward the base body 70b along the inner circumferential surface of the outer guiding portion 61. The fluid that reaches the vicinity of the base body 70b flows from the connecting passage 53 of the outer tube 51 into the air passage 52 so that the fluid is mixed with air in the air passage 52. The high temperature fluid mixed with the air enters the first mixing chamber 81 from the inner connecting passage 71 of the inner tube 41. This raises the temperature of the mixture generated in the premixing chamber 80 compared to when the fluid does not flow into the first mixing chamber 81.

As described above, the burner of the second embodiment has the following advantages in addition to advantages (1) to (6) and (8) described above.
(9) The fuel is mixed with air in advance in the premixing chamber 80 before entering the combustion region 90. Thus, the mixture is easily ignited compared to when the mixture is not generated. Therefore, the fuel supplied to the combustion region 90 is easily burned.
(10) The air flowing through the air passage 52 is heated by the flame F and the combustion gas in the combustion region 90 by coming into contact with the outer circumferential surface of the inner tube 41 before entering the first mixing chamber 81. Thus, the temperature of the mixture is raised and the mixture is easily ignited as compared to when the air is not heated.

The embodiments described above may be modified in the forms described below.

In the first embodiment and the second embodiment, the flow receiving portion 62 does not have to face the edge of the ejection port 42 as long as the combustion gas ejected from the ejection port 42 can be received. Specifically, the flow receiving portion 62 may face the region surrounded by the edge of the ejection port 42, that is, the region inward in the radial direction from the edge of the ejection port 42 in the axial direction of the flame stabilizer 31. Alternatively, the flow receiving portion 62 may face the space outward in the radial direction from the edge of the ejection port 42 in the axial direction of the flame stabilizer 31. Even when the flow receiving portion 62 is arranged outward in the radial direction from the edge of the ejection port 42, at least the combustion gas spread toward the outer side in the radial direction from the edge of the ejection port 42 of the combustion gas ejected from the ejection port 42 is received by the flow receiving portion. Thus, when the flow receiving portion receives the combustion gas at the outer side of the ejection port 42, some of the combustion gas that is ejected from the ejection port 42 is received by the flow receiving portion and then guided to the connecting passage 53 along the outer guiding portion 61.

In the first embodiment and the second embodiment, the flow receiving portion 62 does not have to be annular. For example, the outer edge of the flow receiving portion 62 may have the form of a polygonal or elliptical ring.

In the first embodiment and the second embodiment, the flow receiving portion 62 does not have to be annular, and may be formed to correspond to only one circumferential portion of the ejection port 42. Such a structure also returns the combustion gas to the combustion region since a certain amount of the combustion gas is received by the flow receiving portion 62. It is only required that the shape of the flow receiving portion 62 be designed to be suitable for the position where the combustion gas ejected from the ejection port 42 is received, and that the shape of the flow receiving portion 62 be designed to return the received combustion gas to the connecting passage.

In the first embodiment and the second embodiment, the outer guiding portion 61 does not have to have a cylindrical shape, and may have, for example, a polygonal tubular shape with a polygonal cross-section orthogonal to the axial direction.

In the first embodiment and the second embodiment, the outer guiding portion 61 does not have to be tubular to surround the flame stabilizer 31, and may be formed to correspond to only a circumferential portion of the flame stabilizer 31. For example, the outer guiding portion may include a plurality of plate members formed at predetermined intervals in the circumferential direction of the flame stabilizer 31. In such a structure, the certain amount of combustion gas received by the flow receiving portion 62 is also guided to the flame stabilizer 31 along the outer guiding portion 61.

In the first embodiment and the second embodiment, the inner guiding portion 63 does not have to be cylindrical, and may have, for example, a polygonal tubular shape in having a polygonal cross-section orthogonal to the axial direction.

In the first embodiment and the second embodiment, the inner guiding portion 63 does not have to be tubular, and may be formed to correspond to only a circumferential part of the flow receiving portion 62. In such a structure, the combustion gas is deviated toward the outer edge of the flow receiving portion 62 at the portion where the inner guiding portion is formed. This easily guides the combustion gas to the flame stabilizer 31 as compared to when the inner guiding portion is not formed.

In the first embodiment and the second embodiment, the inner guiding portion 63 may be formed at a position closer to the outer edge of the flow receiving portion 62 than the inner edge of the flow receiving portion 62. In such a structure, a certain amount of the combustion gas also flows outward in the radial direction in the flow receiving portion 62. Thus, the combustion gas is easily guided to the flame stabilizer 31 compared to when the inner guiding portion is not formed.

In the first embodiment and the second embodiment, the recirculation unit 32 may have a structure in which the inner guiding portion 63 is omitted. In such a structure, the combustion gas that strikes the flow receiving portion 62 is returned to the combustion region. This raises the temperature of the combustion region.

In the first embodiment, the position of the connecting passage 53 is not limited to the position closer to the basal end with respect to the middle of the flame stabilizer 31 in the axial direction, and may be in the middle of the flame stabilizer 31 in the axial direction or a position closer to the distal end with respect to the middle. In such a structure, a certain amount of the combustion gas flows into the combustion region through the connecting passage so that the temperature of the combustion region rises as compared to when the combustion gas does not flow into the combustions region. Furthermore, in the second embodiment, the position of the connecting passage 53 does not have to be at the end (basal portion) close to the base body 70b in the outer tube 51, and may be formed at a portion closer to the ejection port 42.

In the first embodiment, a plurality of passage formation portions 43 may be formed in intervals in the circumferential direction at the basal end of the inner tube 41. In such a structure, the plurality of connecting passages 53 are formed by the upstream wall 20a and the inner tube 41. In the second embodiment, the plurality of connecting passages 53 may be formed in the outer tube 51 in intervals in the circumferential direction.

In the first embodiment and the second embodiment, the plurality of connecting passages 53 may be formed in the flame stabilizer 31. In such a structure, the plurality of connecting passages may be formed in predetermined intervals at the basal end of the flame stabilizer 31, or the plurality of connecting passages may be formed at the basal end of the flame stabilizer 31 and at the position closer to the distal end with respect to the basal end.

In the first embodiment and the second embodiment, the air passage 52 does not have to be formed in the flame stabilizer 31. In other words, the flame stabilizer 31 may be formed by a single tube, and the air may be directly supplied to the combustion region from the air supply pipe 13a. In such a structure, the temperature in the combustion region is raised by the combustion gas returned to the flame stabilizer 31 by the recirculation unit 32 so that the fuel is easily burned.

In the first embodiment, the flame stabilizer 31 may have a structure in which the enlarged diameter portion 45 is omitted. In such a structure, some of the combustion gas ejected from the ejection port formed in the constant diameter portion 44 strikes the flow receiving portion 62. Thus, some of the combustion gas is returned to the combustion region by the recirculation unit 32.

The structure of the flame stabilizer and the structure of the recirculation unit described in the first embodiment, the second embodiment, or a modification may be combined.

In the first embodiment and the second embodiment, an ignition source for combusting fuel is not limited to the spark plugs 33a, 33b, and may be a glow plug, a laser spark device, a plasma spark device, and the like, or may be a combination of two or more of these devices. The ignition unit only needs to be capable of igniting the mixture of fuel and air.

In the first embodiment, the housing 20h, the inner tube 41, the outer tube 51, and the recirculation unit 32 are not limited to a cylindrical shape and may have, for example, a polygonal tubular shape having a polygonal cross-section orthogonal to the axial direction, and in the second embodiment, may have a polygonal tubular shape having a polygonal cross-section orthogonal to the axial direction in the inner tube 41 and the outer tube 51.

In the second embodiment, the air supplying hole 46 formed in the inner tube 41 may be omitted, that is, a structure in which the air used for the combustion of fuel is supplied to the combustion region 90 through only the premixing chamber 80 may be adopted.

In the second embodiment, the air supply pipe 13a may be connected to the base body 70b. In other words, the air used for the combustion of fuel may enter the premixing chamber 80 without passing through the air passage 52 formed in the flame stabilizer 31. In this case, the outer tube 51 and the closing plate 54 of the flame stabilizer 31 may be omitted.

In the second embodiment, the position of the ejection port 42 of the flame stabilizer 31 and the distal portion of the outer guiding portion 61 may be further separated in the axial direction of the flame stabilizer 31.

In the second embodiment, the distal end of the flame stabilizer 31 may have an enlarged diameter like in the first embodiment. Such a structure obtains advantage (7) of the first embodiment.

In the second embodiment, the connecting wall portion 73, the mixing inner tube 74, the support plate 75, the mixing outer tube 76, and the closing plate 77, which are the partitioning portions partitioning the premixing chamber 80 and the combustion region 90, may be flat plates arranged at the inner side of the inner tube 41 orthogonal to the axial direction of the inner tube 41. Alternatively, the partitioning portions may include, for example, only the support plate 75, the mixing outer tube 76, and the closing plate 77. In this case, the connecting wall portion 73 and the mixing inner tube 74 are omitted.

In other words, the partitioning portions for partitioning the premixing chamber 80 and the combustion region 90 merely needs to be a member for partitioning the space in which the mixture is generated and the space in which the mixture is ignited in the space defined by the inner tube 41.

The partitioning portions formed by the connecting wall portion 73, the mixing inner tube 74, the support plate 75, the mixing outer tube 76, and the closing plate 77 described above result in a complicated passage that connects the space in which the mixture is generated and the space in which the mixture is ignited. This increases the rate at which the fuel and air are mixed. Thus, the partitioning portion is preferably formed as described above.

In the first embodiment and the second embodiment, instead of the filter 21, any of a variety of catalysts used for the purification of the exhaust may be arranged at the downstream side of the burner 30. Alternatively, the filter 21 and a catalyst may be connected in parallel at the downstream side of the burner 30, and the combustion gas generated by the combustion in the burner 30 and the heated exhaust may be delivered to both of the filter 21 and the catalyst.

In the first embodiment and the second embodiment, the burners 30, 70 do not have to be arranged in front of the filter 21 in the exhaust pipe 18 and may be arranged behind the filter 21 in the exhaust pipe 18.

In the first embodiment, the fuel injection nozzle 34 may be formed to eject vaporized fuel.

In the first embodiment, the fuel injected from the fuel injection nozzle 34 may be supplied from a common rail instead of the fuel pump. Alternatively, a fuel pump for supplying fuel to the fuel injection nozzle 34 may be separately provided.

In the second embodiment, the fuel supply unit 35 may be formed to inject non-vaporized fuel.

In the first embodiment and the second embodiment, the air used for the combustion of fuel in the burners 30, 70 does not have to be the air flowing through the intake pipe 13, and may be, for example, air flowing through a pipe connected to a brake air tank or air supplied from a blower to the burners 30, 70.

The engine including the exhaust purifying device 20 is not limited to the diesel engine 10 and may be a gasoline engine.

### Description of reference symbols

- 10: diesel engine
- 11: cylinder block
- 11a: cylinder
- 12: intake manifold
- 13: intake pipe
- 13a: air supply pipe
- 13b: air valve
- 14: air cleaner
- 15: compressor
- 16: exhaust manifold
- 17: EGR pipe
- 18: exhaust pipe
- 19: turbine
- 20: exhaust purifying device
- 20a: upstream wall
- 20h: housing
- 21: filter
- 30, 70: burner
- 31: flame stabilizer
- 32: recirculation unit
- 33, 33a, 33b: spark plug
- 33c: ignition portion
- 34: fuel injection nozzle
- 35: fuel supply unit
- 41: inner tube
- 42: ejection port
- 43: passage formation portion
- 44: constant diameter portion
- 45: enlarged diameter portion
- 46: air supplying hole
- 51: outer tube
- 52: air passage
- 53: connecting passage
- 54, 77: closing plate
- 55: guiding plate
- 61: outer guiding portion
- 62: flow receiving portion
- 63: inner guiding portion
- 70b: base body
- 71: inner connecting passage
- 72: raised piece
- 73: connecting wall portion
- 74: mixing inner tube
- 75: support plate
- 75a: mixture supply port
- 76: mixing outer tube
- 78: metal mesh
- 80: premixing chamber
- 81: first mixing chamber
- 82: second mixing chamber
- 83: third mixing chamber
- 84: fourth mixing chamber
- 85: fifth mixing chamber
- 90: combustion region
- F: flame
- TC: turbo charger

## Claims

1. A burner (30) for use in an exhaust purifying device (20) that in use purifies exhaust in an exhaust pipe (18) of an engine (10), the burner (30) comprising:
a tubular flame stabilizer (31) including an ejection port (42) in a distal end to eject fluid generated through combustion;
a connecting passage (53) that connects an interior of the flame stabilizer (31) and an exterior of the flame stabilizer (31); and **characterised by**
a recirculation unit (32) arranged at an outer side of the flame stabilizer (31), wherein the recirculation unit (32) includes,
a flow receiving portion (62) that receives the fluid ejected from the ejection port (42), and
a guiding portion that guides the fluid received by the flow receiving portion (62) from the flow receiving portion (62) to the connecting passage (53).

2. The burner (30) according to claim 1, wherein the flow receiving portion (62) is formed to be annular to face an edge of the ejection port (42) in an axial direction of the flame stabilizer (31).

3. The burner (30) according to claim 2, wherein the guiding portion is formed to surround the flame stabilizer (31).

4. The burner (30) according to claim 2 or 3, wherein the guiding portion includes
a tubular outer guiding portion (61) that surrounds the flame stabilizer (31), and
a tubular inner guiding portion (63) that extends from an inner edge of the flow receiving portion (62) toward the ejection port (42).

5. The burner (30) according to any one of claims 1 to 4, wherein the connecting passage (53) is arranged closer to a basal end of the flame stabilizer (31) with respect to a middle of the flame stabilizer (31) in the axial direction.

6. The burner (30) according to any one of claims 1 to 5, wherein
the flame stabilizer (31) includes an inner tube (41) and an outer tube (51) that surrounds the inner tube (41),
the flame stabilizer (31) is connected to an air supply pipe (13a) that supplies air to a gap between the inner tube (41) and the outer tube (51), and
the inner tube (41) includes an air supplying hole (46) that connects the gap between the inner tube (41) and the outer tube (51) with the interior of the inner tube (41).

7. The burner (30) according to any one of claims 1 to 6, wherein the distal end of the flame stabilizer (31) has an enlarged diameter.

8. The burner (30) according to any one of claims 1 to 7, further comprising an ignition unit in the flame stabilizer (31).

9. The burner (30) according to any one of claims 1 to 8, wherein the interior of the flame stabilizer (31) is partitioned into a premixing chamber (80), which generates a mixture of fuel and air, and a combustion region (90), which burns the mixture supplied from the premixing chamber (80).

## Patentansprüche

1. Ein Brenner (30) zur Verwendung in einer Abgasreinigungsvorrichtung (20), die im Betrieb Abgase in einem Abgasrohr (18) eines Motors (10) reinigt, der Brenner (30) weist dabei Folgendes auf:
einen röhrenförmigen Flammenstabilisator (31), einschließlich einer Ausstoßöffnung (42) an einem distalen Ende, um ein durch Brennstoff erzeugtes Fluid auszustoßen;
einen Verbindungsgang (53), der eine Innenseite des Flammenstabilisators (31) und eine Außenseite des Flammenstabilisators (31) verbindet; und **gekennzeichnet durch**
eine Rücklauf-Einheit (32), die an einer Außenseite des Flammenstabilisators (31) angebracht ist, wobei die Rücklauf-Einheit (32) Folgendes einschließt,
einen strömungsaufnehmenden Teil (62), der das aus der Ausstoßöffnung (42) ausgestoßene Fluid aufnimmt, und
einen Führungs-Teil, der das Fluid, das vom strömungsaufnehmenden Teil (62) aufgenommen wird, vom strömungsaufnehmenden Teil (62) zum Verbindungsgang (53) leitet.

2. Der Brenner (30) gemäß Anspruch 1, wobei der strömungsaufnehmende Teil (62) so geformt ist, dass er ringförmig einer Kante der Ausstoßöffnung (42) des Flammenstabilisators (31) in axialer Richtung gegenübersteht.

3. Der Brenner (30) gemäß Anspruch 2, wobei der Führungs-Teil so geformt ist, dass er den Flammenstabilisator (31) umgibt.

4. Der Brenner (30) gemäß Anspruch 2 oder 3, wobei der Führungs-Teil einen
röhrenförmigen äußeren Führungs-Teil (61) einschließt, der den Flammenstabilisator (31) umgibt, und
einen röhrenförmigen inneren Führungs-Teil (63), der von einem inneren Rand des strömungsaufnehmenden Teils (62) zur Ausstoßöffnung (42) verläuft.

5. Der Brenner (30) gemäß eines der Ansprüche 1 bis 4, wobei der Verbindungsgang (53) näher an einem basalen Ende des Flammenstabilisators (31), im Verhältnis zu einem Mittelteil des Flammenstabilisators (31) in axialer Richtung, angeordnet ist.

6. Der Brenner (30) gemäß eines der Ansprüche 1 bis 5, wobei
der Flammenstabilisator (31) ein Innenrohr (41) und ein Außenrohr (51) einschließt, das das Innenrohr (41) umgibt,
der Flammenstabilisator (31) mit einer Luftleitung (13a) verbunden ist, die Luft in eine Lücke zwischen dem Innenrohr (41) und dem Außenrohr (51) leitet, und
das Innenrohr (41) eine Luftzufuhröffnung (46) einschließt, die die Lücke zwischen dem Innenrohr (41) und dem Außenrohr (51) mit dem Inneren des Innenrohrs (41) verbindet.

7. Der Brenner (30) gemäß eines der Ansprüche 1 bis 6, wobei das distale Ende des Flammenstabilisators (31) einen vergrößerten Durchmesser hat.

8. Der Brenner (30) gemäß eines der Ansprüche 1 bis 7, der darüberhinaus eine Zündeinheit im Flammenstabilisator (31) aufweist.

9. Der Brenner (30), gemäß eines der Ansprüche 1 bis 8, wobei die Innenseite des Flammenstabilisators (31) in eine Vormischkammer (80), die ein Kraftstoff-Luft-Gemisch erzeugt, und einen Verbrennungsbereich (90), der das von der Vormischkammer (80) gelieferte Gemisch liefert, unterteilt.

## Revendications

1. Un brûleur (30) destiné à une utilisation dans un dispositif de purification de gaz d'échappement (20) qui, en utilisation, purifie des gaz d'échappement dans un tuyau d'échappement (18) d'un moteur (10), le brûleur (30) comprenant :
un stabilisateur de flamme tubulaire (31) comprenant un port d'éjection (42) dans une extrémité distale destiné à éjecter un fluide généré par une combustion,
un conduit de raccordement (53) qui raccorde un intérieur du stabilisateur de flamme (31) et un extérieur du stabilisateur de flamme (31), et **caractérisé par**
une unité de recirculation (32) agencée au niveau d'un côté extérieur du stabilisateur de flamme (31), où l'unité de recirculation (32) comprend :
une partie de réception de flux (62) qui reçoit le fluide éjecté du port d'éjection (42), et
une partie de guidage qui guide le fluide reçu par la partie de réception de flux (62) de la partie de réception de flux (62) au conduit de raccordement (53).

2. Le brûleur (30) selon la Revendication 1, où la partie de réception de flux (62) est formée de façon à être annulaire et faire face à un bord du port d'éjection (42) dans une direction axiale du stabilisateur de flamme (31).

3. Le brûleur (30) selon la Revendication 2, où la partie de guidage est formée de façon à entourer le stabilisateur de flamme (31).

4. Le brûleur (30) selon la Revendication 2 ou 3, où la partie de guidage comprend :
une partie de guidage extérieure tubulaire (61) qui entoure le stabilisateur de flamme (31), et
une partie de guidage intérieure tubulaire (63) qui s'étend à partir d'un bord intérieur de la partie de réception de flux (62) vers le port d'éjection (42).

5. Le brûleur (30) selon l'une quelconque des Revendications 1 à 4, où le conduit de raccordement (53) est agencé plus près d'une extrémité de base du stabilisateur de flamme (31) par rapport à une partie médiane du stabilisateur de flamme (31) dans la direction axiale.

6. Le brûleur (30) selon l'une quelconque des Revendications 1 à 5, où
le stabilisateur de flamme (31) comprend un tube intérieur (41) et un tube extérieur (51) qui entoure le tube intérieur (41),
le stabilisateur de flamme (31) est raccordé à un tuyau d'alimentation en air (13a) qui fournit de l'air à un espace entre le tube intérieur (41) et le tube extérieur (51), et
le tube intérieur (41) comprend un orifice d'alimentation en air (46) qui raccorde l'espace entre le tube intérieur (41) et le tube extérieur (51) avec l'intérieur du tube intérieur (41).

7. Le brûleur (30) selon l'une quelconque des Revendications 1 à 6, où l'extrémité distale du stabilisateur de flamme (31) possède un diamètre élargi.

8. Le brûleur (30) selon l'une quelconque des Revendications 1 à 7, comprenant en outre une unité d'allumage dans le stabilisateur de flamme (31).

9. Le brûleur (30) selon l'une quelconque des Revendications 1 à 8, où l'intérieur du stabilisateur de flamme (31) est partitionné en une chambre de prémélange (80), qui génère un mélange de carburant et d'air, et une zone de combustion (90), qui brûle le mélange fourni à partir de la chambre de prémélange (80).
